# EUROPÄISCHE PATENTSCHRIFT

(11) **EP 0 929 874 B1**
(45) Veröffentlichungstag und Bekanntmachung des Hinweises auf die Patenterteilung: **13.06.2001**
(21) Anmeldenummer: 97900554.3
(22) Anmeldetag: 02.01.1997
(51) Int. Cl.: G06F 17/60

(54) **VERFAHREN UND VORRICHTUNG ZUM AUFBAU EINER KUNDENDATEN BEINHALTENDEN DATENBANK UND/ODER ZUR ORGANISATION EINES RABATT- BZW. KUPONSYSTEMS**
METHOD AND DEVICE FOR CONSTRUCTING A DATABASE CONTAINING CUSTOMER DATA AND/OR FOR ORGANIZING A DISCOUNT OR COUPON SYSTEM
PROCEDE ET DISPOSITIF POUR CREER UNE BANQUE DE DONNEES CONTENANT DES DONNEES-CLIENTS ET/OU POUR ORGANISER UN SYSTEME DE RABAIS OU DE COUPON

(30) Priorität: 04.10.1996 DE 19641092
(43) Veröffentlichungstag der Anmeldung: 21.07.1999
(73) Patentinhaber: beenz.com inc., New York, NY 10016 (US)
(72) Erfinder: Finsterwald, Martin, Dr., 80538 München (DE)
(74) Vertreter: Gleiss & Grosse
(86) Internationale Anmeldenummer: EP9700005
(87) Internationale Veröffentlichungsnummer: WO9815907

(56) Entgegenhaltungen:
- EP-A- 0 354 260
- EP-A- 0 568 088
- EP-A- 0 709 306
- WO-A-89/04279
- WO-A-96/24213
- DE-C- 4 322 794
- US-A- 4 630 108
- US-A- 4 816 904
- US-A- 4 949 256

## Beschreibung

Die Erfindung betrifft ein Verfahren zum Aufbau einer Kundendaten beinhaltenden Datenbank, bei dem an Kunden zu verkaufende Produkte oder an Kunden beim Kauf von Produkten oder Dienstleistungen ausgehändigte Belege jeweils mit einem Code versehen werden und der Code vom Kunden nach dem Erwerb des Produktes bzw. der Dienstleistung mit den jeweiligen Kunden kennzeichnenden Daten über ein Kommunikationsnetzwerk, insbesondere über Internet oder ein Telefonnetz an eine Datensammelstation übermittelt werden. Weiterhin betrifft die Erfindung die Verwendung eines solchen Verfahrens sowie im Rahmen des Verfahrens einsetzbare Kassencomputer. Schließlich betrifft die Erfindung auch eine Vorrichtung zur Herstellung von Produktverpackungen, Produktaufklebern und Produktanhängern.

Ein Verfahren der genannten Art ist aus dem US-Patent US-A-4,630,108 bekannt. Dieses Verfahren wird dazu eingesetzt, die Fernseh- und auf Konsumgüter bezogene Kaufgewohnheiten von Verbrauchern zu analysieren. Zu diesem Zweck müssen die beteiligten Haushalte mit spezieller, mit einem Fernsehgerät korrespondierender Hardware ausgestattet werden, so daß die ermittelten Daten über eine Telefonleitung an eine Datensammelstation übermittelt werden können.

Ein entsprechendes Verfahren ist aus dem US-Patent US-A-4,816,904 bekannt.

Ein Verfahren zur Organisation eines Rabatt- bzw. Couponsystems ist aus der europäischen Patentanmeldung EP-A-0 354 260 bekannt. In der genannten Anmeldung ist ein Verfahren beschrieben, bei dem Gutscheine oder Rabatthefte mit einzigartigen Codierungen versehen werden, die zudem in einem Computersystem gespeichert werden. Bei Tätigung eines Kaufs und Einlösen des Gutscheins bzw. bei der Verwendung des Rabattheftes wird deren Gültigkeit dadurch überprüft, daß die Codierung gelesen und mit der gespeicherten Codierung verglichen wird. Falls dieser Vergleich zu einem positiven Ergebnis führt, wird dem jeweiligen Käufer ein Rabatt gewährt und zusätzlich wird dem Computersystem weitere Information, wie z.B. Kaufzeitpunkt und Kaufort, übermittelt.

Für die Anbieter von Produkten und/oder Dienstleistungen, insbesondere für Hersteller von Markenprodukten, ist es erstrebenswert, den Kauf der angebotenen Produkte und/oder Dienstleistungen attraktiver zu machen, eine größtmögliche Kundentreue zu erreichen, und schließlich auch direkt mit den jeweiligen Kunden in Kontakt treten zu können, um auf diese Weise Aufschluß über deren Kaufverhalten zu erhalten. Letzteres ermöglicht wiederum, die jeweilige Marketingstrategie bestmöglich an die jeweils vorliegende Situation anzupassen.

Um vorstehend genannte Ziele zu erreichen, werden gemäß dem Stand der Technik oftmals komplizierte Rabattsysteme etabliert oder Preisausschreiben veranstaltet, wobei hier jeweils der hohe organisatorische und verwaltungstechnische Aufwand von Nachteil ist.

Der Erfindung liegt die Aufgabe zugrunde, ein System bereitzustellen, mittels dem Hersteller und Anbieter von Produkten und/oder Dienstleistungen mit geringem wirtschaftlichen Aufwand die Möglichkeit haben, den Kauf ihrer Produkte und/oder Dienstleistungen attraktiver zu gestalten, größtmögliche Kundentreue zu erreichen und durch die Kenntnis kundenspezifischer Daten direkt mit Kunden in Kontakt treten und entsprechende Marketingstrategien flexibel auswählen zu können.

Nach der vorliegenden Erfindung wird diese Aufgabe durch die Merkmale des Anspruchs 1 gelöst.

Erfindungsgemäß wird dem Kunden also bei Tätigung eines Kaufs ein insbesondere individueller, d.h. ein der speziellen Kaufaktion zugeordneter Code zugänglich gemacht, welchen der Kunde nach Tätigung des Kaufs über ein Kommunikationsnetzwerk, insbesondere über Internet oder ein Telefonnetz an eine Datensammelstation übermittelt. Gemeinsam mit dem Code übermittelt der Kunde auch ihn selbst kennzeichnende Daten, wie beispielsweise seine Postanschrift oder seine Internet-Adresse. Vorzugsweise werden letztgenannte Daten in der Datensammelstation dann gespeichert, wenn seitens der Datensammelstation erkannt wird, daß es sich bei dem übermittelten Code um einen gültigen Code handelt.

Bei Durchführung des erfindungsgemäßen Verfahrens dient der mit dem Produkt oder der Dienstleistung ausgehändigte Code dazu, nachzuweisen, daß der Kunde das betreffende Produkt bzw. die betreffende Dienstleistung tatsächlich erworben hat, d.h. der Kunde weist durch die Kenntnis des Codes nach, daß ein entsprechender Kauf getätigt wurde.

Um einen Mißbrauch des erfindungsgemäßen Systems zu vermeiden, wird der Code vor dem Erwerb des Produktes bzw. der Dienstleistung ohne Mitwirkung des Kunden in einem der Datensammelstation zugeordneten Referenzspeicher gespeichert. Nach der durch den Kunden vorgenommenen Übermittlung des Codes an die Datensammelstation wird dieser vom Kunden übermittelte Code mit den zuvor im Referenzspeicher abgelegten Codes verglichen und schließlich werden nur diejenigen übermittelten Codes berücksichtigt, die zuvor bereits im Referenzspeicher abgelegt wurden.

Die vorstehend erläuterte, erfindungsgemäße Vorgehensweise stellt sicher, daß nur solche Codes als gültige Codes berücksichtigt werden, die auch tatsächlich an Kunden gemeinsam mit einem erworbenen Produkt oder einer erworbenen Dienstleistung ausgehändigt wurden.

Der Kunde wird im Rahmen des erfindungsgemäßen Verfahrens zur Übermittlung des Codes und der ihn kennzeichnenden Daten dadurch motiviert, daß ihm diese Datenübermittlung die Teilnahme an einem Bonusprogramm oder einem Preisausschreiben ermöglicht.

Das erfindungsgemäße Verfahren ist auf äußerst wirtschaftliche Weise realisierbar, da es ohne großen technischen Aufwand möglich ist, beispielsweise ohnehin zu bedruckende Produktverpackungen zusätzlich mit einem Code zu versehen oder einen Code auf einem ohnehin zu bedruckenden Beleg anzubringen. Weiterhin ist es beispielsweise im Vergleich zu üblichen Preisausschreiben oder Rabattsystemen erfindungsgemäß nicht mehr nötig, Daten bzw. Adressen auf dem Postweg zu übermitteln, da die Übermittlung des Codes sowie der den jeweiligen Kunden kennzeichnenden Daten über ein elektronisches Kommunikationsnetzwerk, insbesondere über Internet oder ein Telefonnetz erfolgt. Diese Art der Datenübermittlung ist mit deutlich geringerem Verwaltungsaufwand für den Datenempfänger und auch mit weniger Kosten und Aufwand für den die Daten übermittelnden Kunden verbunden.

Besonders vorteilhaft läßt sich das erfindungsgemäße System einsetzen, wenn die Datenübermittlung über Internet abgewickelt wird. In diesem Fall kann der Kunde beim Kauf von Produkten oder Dienstleistungen verschiedenster, am erfindungsgemäßen System teilnehmender Anbieter durch die Übermittlung der jeweiligen Codes Punkte oder "Meilen" in einem einheitlichen, anbieterunabhängigen System sammeln, die dann auf unterschiedliche Weise zum Vorteil des Kunden eingelöst werden können. So ist es beispielsweise denkbar, mit diesen Punkten "Internet-Shopping" zu betreiben, die angesammelten Punkte in e-cash zu wechseln, mit den gesammelten Punkten Nutzungszeiten bestimmter Internet-Dienste zu kaufen oder an exklusiven Preisausschreiben teilzunehmen, wobei die Teilnahmeberechtigung durch die Einlösung einer bestimmten Anzahl von angesammelten Punkten erkauft wird.

Neben diesen für den Kunden offensichtlichen Vorteilen ist die Teilnahme am erfindungsgemäßen System auch für die Anbieter von Produkten und Dienstleistungen, insbesondere für Markenartikler von hohem Interesse, da durch die Zugabe einer bestimmten Anzahl von Punkten zu einem erworbenen Produkt oder einer erworbenen Dienstleistung der Kauf dieses Produktes bzw. dieser Dienstleistung für den Kunden im Vergleich zu Konkurrenzanbietern attraktiver wird. Der Anbieter von Produkten bzw. Dienstleistungen, denen im Rahmen des erfindungsgemäßen Systems sammelbare Punkte beigegeben werden, kann also durch die Teilnahme am erfindungsgemäßen System mit einem erhöhten Absatz seiner Produkte bzw. Dienstleistungen rechnen.

Von besonderem Vorteil ist es, wenn in der Datensammelstation, vorzugsweise im Referenzspeicher das Produkt oder die Dienstleistung betreffende Zusatzinformation gespeichert wird, wobei diese Information jeweils den zugehörigen Codes zugeordnet ist und beispielsweise die Art des Produktes bzw. der Dienstleistung, die Produktionsstätte oder die Verkaufsstelle, den Produktionszeitpunkt oder den Verkaufszeitpunkt und/oder den Preis des Produktes oder der Dienstleistung betrifft.

Diese zusätzliche,Information kann entweder im Code enthalten sein oder sie wird vor dem Erwerb des Produktes bzw. der Dienstleistung ohne Mitwirkung des Kunden in der Datensammelstation, insbesondere gemeinsam mit dem zugehörigen Code im Referenzspeicher der Datensammelstation gespeichert.

Bei der letztgenannten Alternative ist es von Vorteil, daß die Zusatzinformation nicht im Code selbst enthalten sein muß, was letztlich dazu führt, daß mit kürzeren Codelängen gearbeitet werden kann.

Grundsätzlich läßt sich durch die Speicherung der Zusatzinformation zusätzliche Information über das Kaufverhalten eines jeweiligen Kunden gewinnen.

Eine weitere Absicherung gegen Mißbrauch des erfindungsgemäßen Verfahrens läßt sich dadurch erreichen, daß ein mehrere Male von einem oder mehreren Kunden an die Datensammelstation übermittelter Code von der Datensammelstation lediglich bei der ersten Übermittlung berücksichtigt wird. So kann der Kunde durch die Übermittlung eines einzigen Codes nicht zwei oder mehrere Kaufaktionen vortäuschen, obwohl tatsächlich lediglich ein Kauf ausgeführt wurde.

Für die korrekte Durchführung des erfindungsgemäßen Verfahrens ist es nicht unbedingt nötig, daß sich grundsätzlich alle in Verbindung mit Produkten oder Dienstleistungen ausgehändigten Codes voneinander unterscheiden. Es ist vielmehr ausreichend, wenn sich diejenigen Codes, die innerhalb einer bestimmten Zeitspanne an die Datensammelstation übermittelt werden, zumindest mit einer bestimmten Wahrscheinlichkeit voneinander unterscheiden. Bevorzugt ist es jedoch, wenn sich alle innerhalb einer bestimmten Zeitspanne an die Datensammelstation übermittelten Codes voneinander unterscheiden.

Vorstehend genannte Maßnahme ist insbesondere dann von Relevanz, wenn mittels des erfindungsgemäßen Verfahrens nicht nur die Adresse des Kunden, sondern auch sein Kaufverhalten erfaßt werden soll bzw. wenn mittels des erfindungsgemäßen Verfahrens ein Rabatt- bzw. Couponsystem etabliert werden soll, bei dem man beispielsweise ab einer bestimmten Anzahl von gekauften Produkten bzw. gesammelten Punkten eine beliebig geartete Belohnung erhält.

Vorteilhaft ist es, wenn zumindest ein Bestandteil des Codes aus einer Zufallszahl besteht. Bevorzugt ist es, wenn hier eine Pseudo-Zufallszahl verwendet wird, wobei der zur Anwendung kommende Pseudo-Zufallsgenerator sicherstellen muß, daß sich alle innerhalb eines bestimmten Zeitraums erzeugten Zufallszahlen voneinander unterscheiden. Falls ein solcher Pseudo-Zufallsgenerator also tatsächlich eine Zahl erzeugen würde, die bereits zu einem früheren Zeitpunkt innerhalb des definierten Zeitraums generiert wurde, würde diese neuerlich erzeugte Zufallszahl verworfen und eine neue Zufallszahl generiert, die sich von den innerhalb des Zeitraums bisher erzeugten Zufallszahlen unterscheidet.

Die die Zufallszahlen beinhaltenden Codes können zentral erzeugt, im Referenzspeicher der Datensammelstation gespeichert und den jeweiligen Anbietern von Produkten oder Dienstleistungen zur Verfügung gestellt werden, damit diese den erzeugten Code in Verbindung mit ihrem Produkt oder ihrer Dienstleistung dem jeweiligen Kunden aushändigen können.

Ebenso ist es möglich, daß die Codes vom Anbieter des Produktes bzw. der Dienstleistung beispielsweise mittels eines geeigneten Zufallsgenerators selbst erzeugt und dann einer zentralen Stelle, insbesondere dem Referenzspeicher der Datensammelstation mitgeteilt werden. Wenn hier verschiedene Anbieter Codes erzeugen, muß sichergestellt werden, daß nicht zwei Anbieter die gleichen Codes erzeugen. Dies läßt sich beispielsweise dadurch erreichen, daß dem Code zusätzlich zu der erzeugten Zufallszahl noch eine den jeweiligen Anbieter oder den jeweiligen Zufallsgenerator kennzeichnende unveränderliche Codierung hinzugefügt wird.

Bei beiden vorstehend genannten Alternativen wird erreicht, daß die in Verbindung mit den Produkten bzw. Dienstleistungen ausgehändigten Codes zum Zeitpunkt der Aushändigung bereits im Referenzspeicher der Datensammelstation vorhanden sind, so daß geprüft werden kann, ob ein von einem Kunden an die Datensammelstation übermittelter Code gültig ist.

Der erfindungsgemäße Code besteht bevorzugt aus einer Ziffernfolge und/oder einer Buchstaben-/Ziffernfolge und/oder einem Barcode und/oder aus magnetisch, optisch oder elektronisch gespeicherten Daten. Besonders bevorzugt ist es, wenn der Code maschinenlesbar ausgebildet ist, was sich dann vorteilhaft auswirkt, wenn der Kunde beispielsweise einen an das Internet angeschlossenen PC betreibt, welcher mit einer Vorrichtung zum Lesen eines maschinenlesbaren Codes ausgerüstet ist. In diesem Fall läßt sich die Datenübermittlung für den Kunden besonders einfach gestalten. Auch die Möglichkeit des Mißbrauchs wird durch die Verwendung eines maschinenlesbaren Codes, insbesondere eines Barcodes verringert, da ein solcher Code nur mittels eines entsprechenden Lesegeräts entziffert werden kann. So kann beispielsweise ausgeschlossen werden, daß ein auf einer Produktverpackung befindlicher Code von jemandem notiert wird, der das Produkt überhaupt nicht erwirbt und der dann den Kauf des Produktes durch die Übermittlung des notierten Codes vortäuschen könnte.

Falls der Code nicht auf einem Produkt selbst oder auf Produktverpackungen angebracht wird, sondern Belege als Codeträger verwendet werden, ist es sinnvoll, hierfür von einem Kassencomputer ausgedruckte Rechnungen zu verwenden. Auf diese Weise ist es nicht nötig, für die Realisierung des erfindungsgemäßen Verfahrens zusätzlich Belege zu erstellen, da die ohnehin erstellten Rechnungen einfach zusätzlich mit dem erfindungsgemäßen Code versehen werden können.

In einer Abwandlung des erfindungsgemäßen Verfahrens ist es auch möglich, einen im Kassencomputer generierten Code direkt vom Kassencomputer gemeinsam mit den den Kunden kennzeichnenden Daten an die Datensammelstation zu übermitteln. Der Kunde muß in diesem Fall dem Kassenpersonal lediglich die ihn kennzeichnenden Daten auf geeignete Weise mitteilen. Eine weitere Aktion des Kunden ist dann nicht mehr nötig.

Außer auf Produktverpackungen oder Rechnungen läßt sich der erfindungsgemäße Code natürlich ebenso auf Eintrittskarten, per Post übersandten Telefonrechnungen und dergleichen anbringen.

Weiterhin ist es möglich, zumindest einen Teil des zu übermittelnden Codes durch ein handelsübliches Barcode-Preisetikett zu bilden. In diesen Barcode-Preisetiketten sind ohnehin Informationen über das jeweils erworbene Produkt enthalten, so daß diese Daten nicht mehr gesondert in den erfindungsgemäßen Code aufgenommen oder an die Datensammelstation übermittelt werden müssen. Beispielsweise ist es möglich, den auf einer von einem Kassencomputer ausgedruckten Rechnung aufgedruckten Code, welcher beispielsweise durch eine enthaltene Zufallszahl einen Schutz gegen Mißbrauch bewirkt, zusätzlich zu denjenigen Codes zu übermitteln, die auf Barcode-Preisetiketten aufgedruckt sind.

Eine andere oder auch zusätzliche Möglichkeit, einen Mißbrauch des erfindungsgemäßen Verfahrens auszuschließen, besteht darin, daß der Code an einem von außen nicht sichtbaren und/oder nicht zugänglichen Ort einer Produktverpackung oder eines Produktaufklebers angeordnet, insbesondere aufgedruckt, eingestanzt oder aufgeklebt ist. Auf diese Weise wird vermieden, daß ein Kunde, der beispielsweise in einem Warenhaus frei zugänglich ausgestellte Produktverpackungen sieht, den auf der Produktverpackung befindlichen Code notiert und an die Datensammelstation übermittelt, ohne das Produkt gekauft zu haben. In letztgenanntem Fall kann nämlich nur derjenige Kunde, der das Produkt tatsächlich erwirbt und die Verpackung öffnet, den zu übermittelnden Code sehen, so daß ein Mißbrauch ausgeschlossen wird.

Aufgrund der über das Kaufverhalten der Kunden gewonnenen Information kann beispielsweise erreicht werden, daß die Kunden individuell beworben werden können, wobei die Werbung jeweils konkret an das ermittelte Kaufverhalten anpaßbar ist.

Um eine noch gezieltere Werbung zu ermöglichen, können in der Datensammelstation kundenspezifische Daten, wie z.B. der Name, die Postanschrift, die Telefonnummer, das Alter, das Geschlecht und/oder der Beruf des Kunden gespeichert werden. Insbesondere ist es sinnvoll, in der Datensammelstation die Netzwerk-, insbesondere die Internet-Adresse des Kunden zu speichern, da dann auch das automatische Übersenden von Werbebotschaften über das Netzwerk bzw. über Internet möglich wird, was auf vorteilhafte Weise mit deutlich geringeren Kosten als die Übersendung von Werbebotschaften per Post verbunden ist.

Für bestimmte Anwendungsfälle kann es auch interessant sein, in der Datensammelstation den Zeitpunkt der Datenübermittlung vom Kunden an die Datensammelstation zu speichern. Wenn beispielsweise zusätzlich auch noch der im Code enthaltene Herstellungszeitpunkt eines Produktes übermittelt wird, kann auf diese Weise zumindest mit einer gewissen Wahrscheinlichkeit festgestellt werden, wieviel Zeit zwischen der Herstellung und dem Verkauf eines Produktes verstreicht.

Wenn mit dem erfindungsgemäßen System erreicht werden soll, daß ein sich über einen längeren Zeitraum öfters wiederholender Kontakt zum Kunden hergestellt werden soll, d.h., daß der Kunde insbesondere in Verbindung mit einem Rabatt- oder Couponsystem mehrmals - immer nach dem Erwerb eines Produktes oder einer Dienstleistung - Kontakt mit der Datensammelstation aufnimmt, läßt sich das erfindungsgemäße System in der nachfolgend beschriebenen Weise besonders wirtschaftlich realisieren.

Lediglich bei einer ersten Kontaktaufnahme eines Kunden mit der Datensammelstation werden kundenspezifische Daten, insbesondere Name, Postanschrift und/oder die Netzwerk-Adresse gespeichert, woraufhin dem Kunden im Rahmen dieser ersten Kontaktaufnahme eine Kennziffer bzw. ein Kenncode zugeteilt wird. Dies ist insbesondere auch dann möglich, wenn die Kommunikation zwischen Kunden und Datensammelstation über ein Telefonnetz erfolgt.

Die Zuteilung einer Kennziffer bzw. eines Kenncodes bedingt auf vorteilhafte Weise, daß sich der Kunde bei allen nach der ersten Kontaktaufnahme erfolgenden weiteren Kontaktaufnahmen mittels der Kennziffer bzw. des Kenncodes identifizieren kann, so daß bei diesen weiteren Kontaktaufnahmen keine kundenspezifischen Daten mehr übermittelt werden müssen, sondern lediglich noch die Übermittlung der Kennziffer bzw. des Kenncodes und des dem jeweils erworbenen Produkt bzw. der jeweils erworbenen Dienstleistung zugeordneten Codes nötig ist. Letztgenannte Übermittlung kann zumindest auf Seiten der Datensammelstation vollautomatisch erfolgen.

Besonders bevorzugt ist diese Ausführungsform des erfindungsgemäßen Verfahrens anwendbar, wenn die Datenübermittlung über eine Telefonnetz erfolgt, da hier bei der ersten Kontaktaufnahme beispielsweise die kundenspezifischen Daten über ein Call-Center ermittelt werden können, woraufhin dann alle weiteren Kontaktaufnahmen eines Kunden vollautomatisch erledigt werden. Das Call-Center führt in diesem Fall der ersten Kontaktaufnahme ein Gespräch mit dem Kunden, bei dem der Kunde die gewünschten Daten mitteilt und vom Call-Center eine Kennziffer bzw. einen Kenncode zugeordnet bekommt. Das Call-Center veranlaßt daraufhin die Speicherung der kundenspezifischen Daten sowie der Kennziffer bzw. des Kenncodes.

Bei folgenden Kontaktaufnahmen wird der Kunde dann durch eine automatische Ansage gefragt, ob ihm bereits eine Kennziffer zugeordnet ist oder nicht. Der Kunde kann diese Frage mittels einer Tastatureingabe beantworten, woraufhin er entweder - bei einer ersten Kontaktaufnahme - zum Call-Center durchgeschaltet wird oder - bei einer weiteren Kontaktaufnahme - ein seitens der Datensammelstation automatisierter Prozeß abläuft. Im Rahmen dieses automatisierten Prozesses wird der Kunde mittels einer Ansage dazu aufgefordert, den mit dem Produkt bzw. der Dienstleistung verbundenen Code über die Telefontastatur einzugeben, nachdem er sich mittels seiner ebenfalls über die Telefontastatur eingegebenen Kennziffer bzw. seinem Kenncode identifiziert hat.

Auf die beschriebene Weise können alle nach der ersten Kontaktaufnahme erfolgenden weiteren Kontaktaufnahmen seitens der Datensammelstation ohne menschliche Mithilfe vollautomatisch erfolgen, was erhebliche wirtschaftliche Vorteile bietet.

Eine vorteilhafte Verwendung des erfindungsgemäßen Verfahrens besteht darin, daß ein Kunde, nachdem er eine bestimmte Anzahl von Käufen getätigt hat, die einen bestimmten Gegenwert entsprechen, bzw. nachdem er eine bestimmte Anzahl von Punkten gesammelt hat, eine über das Kommunikationsnetzwerk, insbesondere über Internet übermittelbare Belohnung erhält. Diese Belohnung kann beispielsweise in Form einer Gutschrift eines bestimmten Geldbetrages (e-cash), durch Einräumung bestimmter Internet-Shopping-Rechte oder durch Einräumung von über Internet ausübbaren Nutzungsrechten erfolgen.

Insbesondere ist es auch möglich, daß als Belohnung in Abhängigkeit von bestimmten, bezüglich eines Kunden in der Datensammelstation gespeicherten Daten eine Zugangsberechtigung zu einer vorgegebenen Internet-Adresse, insbesondere einen Chat-room freigeschaltet wird. Auf diese Weise können beispielsweise nur solche Internet-Teilnehmer Zugang zu bestimmten Chatrooms erhalten, die innerhalb eines bestimmten Zeitraums eine bestimmte Menge von Markenartikeln erworben haben.

Eine gezielte und individuelle Werbung eines Kunden wird im Rahmen des erfindungsgemäßen Verfahrens insbesondere dann besonders wirtschaftlich durchführbar, wenn in Abhängigkeit von bestimmten, bezüglich eines Kunden in der Datensammelstation gespeicherten Daten eine automatische Kontaktaufnahme mit dem Kunden über das Kommunikationsnetzwerk, insbesondere über Internet erfolgt. Die Auswahl der jeweiligen Werbebotschaft kann dabei vorzugsweise in Abhängigkeit der gespeicherten Daten erfolgen, so daß individuelle, beispielsweise an das konkrete Kaufverhalten des jeweiligen Kunden angepaßte Werbebotschaften übermittelbar sind. Ebenso ist es natürlich möglich, Kunden verschiedener Altersgruppen oder verschiedenen Geschlechts entsprechend unterschiedlich zu bewerben.

Im Rahmen der Erfindung wird auch Schutz beansprucht für Vorrichtungen zur Herstellung von im Rahmen des erfindungsgemäßen Verfahrens verwendbaren Produktverpackungen, Produktaufklebern und/oder Produktanhängern, die eine Einheit zur Markierung der Produktverpackungen, Produktaufkleber und/oder Produktanhänger mit einem Code aufweisen. In dieser Vorrichtung kann zusätzlich ein Pseudo-Zufallsgenerator der vorstehend beschriebenen Art integriert sein, welcher zur Generierung der erfindungsgemäßen Codes geeignet ist. Weiterhin kann die Vorrichtung eine Einrichtung aufweisen, mittels welcher die in der Vorrichtung generierten Codes an die Datensammelstation, insbesondere an deren Referenzspeicher übermittelbar sind.

Bevorzugt ist die Einheit zur Markierung derart ausgestaltet, daß der Code auf einer von außen nicht sichtbaren Stelle der fertigen Produktverpackung, insbesondere auf der Rückseite eines bereits bedruckten oder noch zu bedruckenden Verpackungszuschnitts anbringbar ist.

Im Rahmen der Erfindung wird auch Schutz beansprucht für einen Kassencomputer, welcher mit einer Einheit zur Generierung oder zum Empfang eines erfindungsgemäßen Codes und ein Druckwerk zum Ausdrucken dieses Codes auf einen Beleg aufweist.

Der Kassencomputer kann weiterhin mit einem Zufallsgenerator zur Generierung zumindest eines Bestandteils eines erfindungsgemäßen Codes ausgerüstet sein. Von Vorteil ist es, wenn hierbei eine Vorrichtung zur Vermeidung der Generierung zweier untereinander gleicher Codes innerhalb eines bestimmten Zeitraums vorgesehen wird.

Ebenfalls bevorzugt ist es, wenn der Kassencomputer einen Anschluß für ein Kommunikationsnetzwerk, insbesondere einen Internet-Anschluß aufweist, über den die erzeugten bzw. ausgedruckten Codes und/oder eine vom Kassencomputer erzeugte Zusatzinformation an die Datensammelstation übermittelbar sind. Falls die Codes nicht im Kassencomputer erzeugt werden, ist es auch möglich, über den genannten Anschluß für das Kommunikationsnetzwerk Codes, die an zentraler Stelle, insbesondere in der Datensammelstation erzeugt werden, von dieser zentralen Stelle an den Kassencomputer zu übermitteln, wo diese Codes dann auf Belege ausgedruckt werden.

Ein derartiger Anschluß für ein Kommunikationsnetzwerk ist insbesondere dann sinnvoll, wenn in der Datensammelstation in der vorstehend bereits beschriebenen Weise ein Vergleich der entweder vom Kassencomputer oder von zentraler Stelle erzeugten Codes mit den vom Kunden übermittelten Codes erfolgen soll, um auf diese Weise die Möglichkeit eines Mißbrauchs auszuschließen.

Besonders vorteilhaft ist es, wenn im Kassencomputer eine Vorrichtung enthalten ist, die gewährleistet, daß die Übermittlung der erzeugten Codes nur paketweise, insbesondere zu vorgegebenen Zeiten oder in vorgegebenen Zeitintervallen erfolgt, um auf diese Weise die entstehenden Verbindungskosten zu minimieren.

Im Rahmen der Erfindung gelangen beispielsweise bedruckte Kassenbelege, bedruckte Rechnungen oder bedruckte Eintrittskarten zum Einsatz, wobei auf die vorstehend genannten Gegenstände ein erfindungsgemäßer Code aufgebracht ist, und zwar zusätzlich zu den üblichen Angaben wie Preis, Datum, Verkaufsstelle, Produktspezifikation und dergleichen. Der Code kann beispielsweise aufgedruckt, eingestanzt, aufgeklebt oder in sonstiger Weise beigefügt werden.

Im Rahmen der Erfindung gelangen jedoch auch Produktverpakkungen, Produktaufkleber und/oder Produktanhänger zum Einsatz, bei denen der erfindungsgemäße Code an einer bei befüllter und geschlossener Produktverpackung nicht sichtbaren und/oder nicht zugänglichen Position angeordnet ist.

Die bevorzugte Ausführungsform des erfindungsgemäßen Verfahrens wird nachfolgend anhand der Zeichnungen beschrieben; in diesen zeigen:
- Figur 1: ein Prinzipschaubild des Zusammenwirkens einzelner Komponenten zur Realisierung des erfindungsgemäßen Verfahrens,
- Figur 2: eine erfindungsgemäße Produktverpackung, und
- Figur 3: einen erfindungsgemäßen bedruckten Beleg.

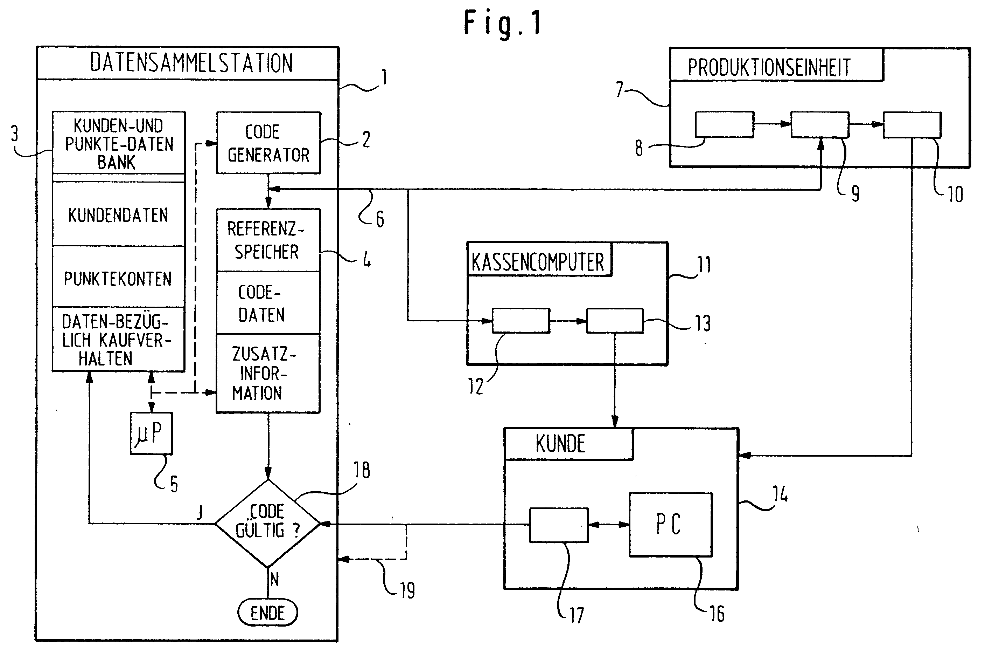

Figur 1 zeigt eine Datensammelstation 1, welche mit einem Codegenerator 2, einer Kunden- und Punkte-Datenbank 3 sowie mit einem Referenzspeicher 4 ausgestattet ist. Das Zusammenwirken dieser Komponenten 2, 3, 4 wird von einer Steuerungseinheit 5 kontrolliert.

Der Codegenerator 2 generiert bei entsprechender Beaufschlagung durch die Steuerungseinheit 5 ein Paket von untereinander verschiedenen Codes. Über die Steuerungseinheit 5 wird beispielsweise durch manuelle Eingabe den generierten Codes jeweils eine Zusatzinformation zugeordnet, beispielsweise eine Produktspezifikation und ein Produktpreis. Diese Information wird dann einschließlich der generierten Codes in einander zugeordneter Form im Referenzspeicher 4 abgelegt. Der Referenzspeicher 4 besteht also im wesentlichen aus einer Tabelle, in der jedem Code eine Produktspezifikation und ein Produktpreis zugeordnet ist.

Die vom Codegenerator 2 generierten Codes werden paketweise - ohne die erwähnte Zusatzinformation - über eine Internetverbindung 6 an eine Produktionseinheit 7 übermittelt, in der Produktverpackungen hergestellt und befüllt werden.

Diese Produktionseinheit 7 weist eine Vorrichtung 8 auf, in der Verpackungszuschnitte erzeugt werden. Diese Verpakkungszuschnitte gelangen dann zu einer Einheit 9, welche zum Empfang der vom Codegenerator 2 übermittelten Codes ausgelegt ist. Die von der Einheit 9 empfangenen Codes werden durch ein ebenfalls in der Einheit 9 enthaltenes Druckwerk auf die Verpackungszuschnitte aufgedruckt. Das Druckwerk ist dabei derart angeordnet, daß der Code letztlich auf einer von außen nicht sichtbaren Stelle der fertigen Produktverpackung zu liegen kommt.

Im Rahmen des Druckprozesses wird sichergestellt, daß auf jeden Verpackungszuschnitt ein individueller Code gedruckt wird, d.h. es werden innerhalb eines definierten Zeitraums, beispielsweise innerhalb von ein oder zwei Jahren, keine zwei Verpackungszuschnitte erzeugt, die den gleichen Code aufweisen.

Die auf die genannte Weise bedruckten Verpackungszuschnitte gelangen nun zu einer Verpackungseinheit 10, in der die Produktverpackungen fertiggestellt und befüllt werden.

Ausgehend vom Codegenerator 2 werden Pakete von Codes über die Internetverbindung 6 nicht nur an die Produktionseinheit 7, sondern auch an einen Kassencomputer 11 gesandt.

Der Kassencomputer 11 weist eine Einheit 12 zum Empfang von über die Internetverbindung 6 übermittelten Codes bzw. Codepaketen auf. Die empfangenen Codes werden dann von einem Druckwerk 13 auf vom Kassencomputer 11 auszudruckende Kassenbelege gedruckt, wobei sichergestellt wird, daß jedem Kassenbeleg ein individueller Code zugeordnet ist, d.h. zumindest innerhalb eines bestimmten Zeitraums werden keine zwei untereinander gleichen Codes auf unterschiedliche Kassenbelege gedruckt.

Die in der Datensammelstation 1 enthaltene Steuerung 5 steuert den Codegenerator 2 derart an, daß sichergestellt ist, daß die Produktionseinheit 7 zur Herstellung von Produktverpackungen und der Kassencomputer 11 jeweils voneinander verschiedene Codes erhalten, so daß kein Code existiert, der zugleich auf einer Produktverpackung und einem Beleg aufgebracht ist. Bei Integration von mehreren Produktionseinheiten 7 und/oder mehreren Kassencomputern 11 in das erfindungsgemäße Verfahren wird durch die Steuerung 5 dementsprechend sichergestellt, daß - zumindest innerhalb bestimmter Zeitintervalle - an alle angeschlossenen Einheiten 7, 11 grundsätzlich immer unterschiedliche Codes übertragen werden.

Ein Kunde 14 erwirbt über herkömmliche Distributionswege Produkte, die auf der Innenseite mit Codes versehen sind, die durch die Einheit 9 aufgebracht wurden. Weiterhin werden dem Kunden 14 im Rahmen von Käufen bestimmter Produkte oder Dienstleistungen vom Kassencomputer 11 ausgedruckte Belege ausgehändigt, die mit einem von der Einheit 13 aufgedruckten Code versehen sind.

Auf die beschriebene Weise erlangt der Kunde 14 Kenntnis von Codes, die zuvor vom Codegenerator 2 erzeugt und entweder an die Produktionseinheit 7 oder den Kassencomputer 11 übermittelt wurden.

Der Kunde 14 übermittelt die ihm zur Kenntnis gebrachten Codes mittels seines PCs 16 und der daran angeschlossenen Internet-Schnittstelle 17 an die Datensammelstation 1. Dabei gibt der Kunde 14 zuerst ihn kennzeichnende Daten ein, um sich gegenüber der Datensammelstation 1 zu identifizieren. Dies führt bei einem Erstkontakt dazu, daß in der Datensammelstation 1 ein neuer Datensatz für den Kunden 14 in der Kunden- und Punkte-Datenbank 3 angelegt wird. Bei einem Zweit- oder weiteren Kontakt identifiziert sich der Kunde 14 lediglich mit einer im Rahmen des Erstkontakts zugeteilten Kennziffer.

Bei künftigen Technologien ist auch denkbar, daß der Code beim Kauf eines Produktes direkt drahtlos oder drahtgebunden von einem Kassencomputer 11 in einen mobilen Kunden-PC übertragen wird, von dem aus dann die weitere Übertragung an die Datensammelstation 1 erfolgt. In diesem Fall wird die durch den Kunden 14 vorzunehmende Codeeingabe eingespart.

Nach der vorstehend genannten Identifizierung des Kunden 14 wird in der Datensammelstation 1 bei 18 überprüft, ob es sich bei dem übermittelten Code um einen gültigen Code handelt. Hierzu wird der übermittelte Code mit den im Referenzspeicher 4 abgelegten Codes verglichen. Falls der übermittelte Code im Referenzspeicher 4 vorhanden ist, handelt es sich um einen gültigen Code. Anderenfalls ist der Code ungültig.

Wird nun also eine gültige Codeübermittlung vom Kunden 14 an die Datensammelstation 1 festgestellt, so wird die Kunden- und Punkte-Datenbank 3 entsprechend aktualisiert bzw. das Punktekonto des Kunden 14 erhöht.

Insbesondere werden die bereits vor der Codeübermittlung in der Datensammelstation 1 gespeicherten Zusatzinformationen, die dem übermittelten Code zugeordnet sind, vom Referenzspeicher 4 in die Kunden- und Punkte-Datenbank 3 übertragen und dem jeweiligen Kunden 14 zugeordnet. Diese Daten geben dann Aufschluß über das Kaufverhalten des Kunden 14.

Weiterhin wird der Wert des übermittelten Codes überprüft, woraufhin dem Kunden 14 auf seinem in der Kunden- und Punkte-Datenbank 3 vorhandenen Punktekonto eine entsprechende Anzahl von Punkten gutgeschrieben wird.

Nachdem ein vom Kunden 14 übermittelter Code als gültig erkannt wurde, wird dieser Code im Referenzspeicher 4 gelöscht, um so zu vermeiden, daß der Code noch ein zweites Mal als gültiger Code erkannt wird, wenn der Kunde 14 beispielsweise denselben Code nochmals an die Datensammelstation 1 senden sollte.

Diesen Vorgang kann der Kunde 14 mit jedem neuen Code wiederholen, der ihm über Produktverpackungen oder Kassenbelege zugänglich gemacht wird. Auf diese Weise können vom Kunden 14 Punkte gesammelt werden, die er dann auf die eingangs bereits beschriebene Weise in eine entsprechend geartete Belohnung eintauschen kann.

Mit jedem vom Kunden 14 an die Datensammelstation 1 übermittelten gültigen Code wächst demzufolge das Punktekonto des Kunden 14 und werden zusätzlich Daten seines Kaufverhaltens in der Kunden- und Punkte-Datenbank 3 gespeichert.

Diese Daten können dann auf die eingangs ebenfalls beschriebene Weise vom Anbieter der an den Kunden 14 verkauften Produkte bzw. Dienstleistungen insbesondere zur Anpassung der jeweiligen Marketingstrategie oder zur Übermittlung von Werbebotschaften genutzt werden.

Von Vorteil ist es, wenn die Datensammelstation 1 anhand des vom Kunden 14 übermittelten Codes bzw. anhand der im Referenzspeicher 4 bezüglich dieses Codes gespeicherten Zusatzinformation feststellen kann, von welchem Produkt- oder Dienstleistungsanbieter dem Kunden 14 der jeweilige Code zur Kenntnis gebracht wurde. In diesem Fall kann dann beispielsweise beim Aufbau einer Internetverbindung zwischen Kunde 14 und Datensammelstation 1 eine auf den jeweiligen Anbieter bezogene Werbung eingeblendet oder auf die Homepage des jeweiligen Anbieters umgeschaltet werden. Durch die letztgenannte Maßnahme kann der Anbieter direkt interaktiv mit dem Kunden 14 in Kontakt treten.

Wenn der Kunde 14 sich über seinen Punktekontostand informieren möchte oder die angesammelten Punkte gegen eine Belohnung eintauschen möchte, kann er mit der Datensammelstation 1 über die Internetverbindung 19 in Kontakt treten und die gewünschten Aktionen auslösen.

Im Rahmen des vorstehend beschriebenen Verfahrens werden Codes vom Codegenerator 2 an den Kassencomputer 11 übermittelt. Bevorzugt ist es, wenn hier Codes unterschiedlicher Wertigkeit, d.h. Codes, die unterschiedlichen Punktewerten entsprechen, übermittelt werden und diese Codes je nach dem Betrag des getätigten Kaufs auf die auszudruckenden Belege aufgebracht werden. So läßt sich erreichen, daß mit einem Kauf über einen hohen Betrag auch eine höhere Anzahl von Punkten gesammelt werden kann. Es muß hierbei natürlich dafür gesorgt werden, daß im Kassencomputer 11 immer ein ausreichender Vorrat an Codes unterschiedlicher Wertigkeit gespeichert ist.

Bei Übermittlung der Codes vom Codegenerator 2 zum Kassencomputer 11 werden die übermittelten Codes gleichzeitig im Referenzspeicher 4 gemeinsam mit einer Kennung des Kassencomputers 11 gespeichert, so daß in der Datensammelstation 1 bei Übermittlung des Codes vom Kunden 14 an die Datensammelstation 1 festgestellt werden kann, bei welchem Kassencomputer 11 der Kunde 14 seinen Kauf getätigt hat. Vor Übermittlung des Codes vom Kunden 14 an die Datensammelstation 1 stellt die Kennung des Kassencomputers 11 eine im Referenzspeicher 4 abgelegte Zusatzinformation dar.

Alternativ zum beschriebenen Verfahren ist es auch möglich, die Codes in der Produktionseinheit 7 und/oder im Kassencomputer 11 selbst zu generieren und die generierten Codes über eine Internetverbindung an den Referenzspeicher 4 der Datensammelstation 1 zu übermitteln. Gleichzeitig mit dieser Codeübermittlung wird dann von den Einheiten 7, 11 auch die jeweilige Zusatzinformation übermittelt.

Letztgenannte Alternative ist insbesondere hinsichtlich des Kassencomputers 11 von Vorteil, da bei Erstellung eines an einen Kunden 14 ausgehändigten Belegs dem Kassencomputer bekannt ist, welche Art von Produkten der Kunde 14 erworben hat und welche Preise diesen Produkten jeweils zugeordnet sind. Weiterhin hat der Kassencomputer 11 Kenntnis über das Datum des getätigten Kaufs. All diese Zusatzinformation kann vom Kassencomputer 11 an den Referenzspeicher 4 zum Zwecke einer späteren Auswertung in der Kunden- und Punkte-Datenbank 3 übermittelt werden.

Bei diesem Verfahren ist es nötig, daß ein Bestandteil der in den Einheiten 7, 11 generierten Codes eine individuelle und unveränderliche Kennung für die Einheiten 7, 11 darstellt, um so sicherzustellen, daß in unterschiedlichen Einheiten 7, 11 nicht identische Codes generiert werden. Weiterhin muß in den Einheiten 7, 11 ein Zufallsgenerator vorhanden sein, welcher so zu programmieren ist, daß zumindest innerhalb eines bestimmten Zeitraums generierte Codes voneinander unterschiedlich sind.

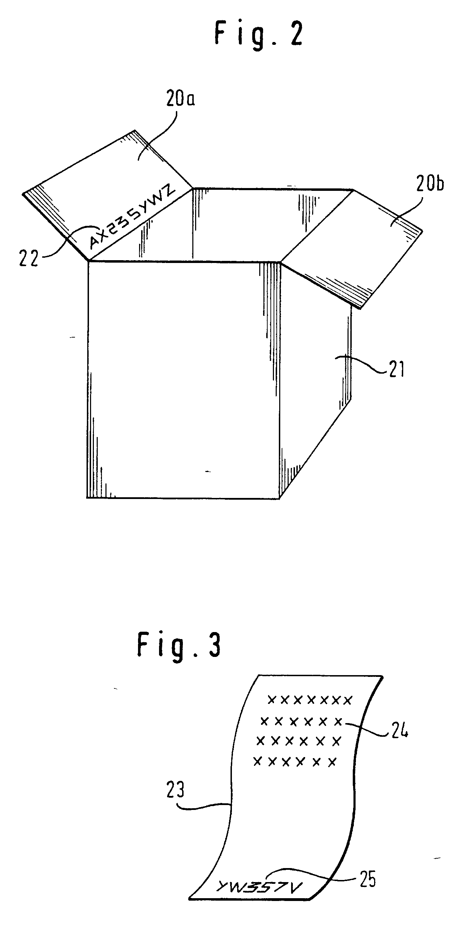

Figur 2 zeigt eine Produktverpackung 21, die im Rahmen des erfindungsgemäßen Verfahrens Verwendung finden kann.

Auf der Innenseite des Deckelteils 20a der Produktverpakkung 21 ist ein Code 22 aufgedruckt, welcher bei geschlossener Verpackung 21 nicht sichtbar ist.

Figur 3 zeigt einen im Rahmen des erfindungsgemäßen Verfahrens verwendbaren Beleg 23, welcher neben dem üblicherweise aufgedruckten Daten 24 auch noch einen erfindungsgemäßen Code 25 aufweist. Im Gegensatz zur Produktverpackung 21 gemäß Figur 2 muß der Code 25 auf dem Beleg 23 nicht versteckt angebracht werden, da der Beleg ohnehin nur demjenigen Kunden ausgehändigt wird, welcher den entsprechenden Kauf getätigt hat. Ein Mißbrauch ist somit nicht möglich.

## Patentansprüche

1. Verfahren zum Aufbau einer Kundendaten beinhaltenden Datenbank (3), bei dem an Kunden (14) zu verkaufende Produkte (21) oder an Kunden (14) beim Kauf von Produkten (21) oder Dienstleistungen ausgehändigte Belege (23) jeweils mit einem Code (22, 25) versehen werden und der Code (22, 25) vom Kunden (14) nach dem Erwerb des Produktes (21) bzw. der Dienstleistung mit den jeweiligen Kunden (14) kennzeichnenden Daten über ein Kommunikationsnetzwerk, insbesondere über Internet oder ein Telefonnetz an eine Datensammelstation (1) übermittelt werden,
dadurch **gekennzeichnet**,
daß der Code (22, 25) vor dem Erwerb des Produktes (21) bzw. der Dienstleistung ohne Mitwirkung des Kunden (14) in einem der Datensammelstation (1) zugeordneten Referenzspeicher (4) gespeichert wird, daß nach der durch den Kunden (14) vorgenommenen Übermittlung des Codes (22, 25) an die Datensammelstation (1) ein Vergleich dieses vom Kunden (14) übermittelten Codes (22, 25) mit den zuvor im Referenzspeicher (4) abgelegten Codes (22, 25) erfolgt, und daß zur Organisation eines Rabatt- bzw. Kupon - bzw. Belohnungssystems von der Datensammelstation (1) nur diejenigen übermittelten Codes (22, 25) berücksichtigt werden, die zuvor bereits im Referenzspeicher (4) abgelegt wurden.

2. Verfahren nach Anspruch 1,
dadurch **gekennzeichnet**,
daß als Code (22, 25) ein individueller Code verwendet wird.

3. Verfahren nach einem der Ansprüche 1 oder 2,
dadurch **gekennzeichnet**,
daß die Datensammelstation (1) zumindest zur Speicherung der den jeweiligen Kunden (14) kennzeichnenden Daten ausgelegt ist.

4. Verfahren nach einem der vorhergehenden Ansprüche,
dadurch **gekennzeichnet**,
daß in der Datensammelstation (1), vorzugsweise im Referenzspeicher (4) das Produkt (21) oder die Dienstleistung betreffende Zusatzinformation gespeichert wird, wobei diese Information jeweils dem zugehörigen Code (22, 25) zugeordnet ist und beispielsweise die Art des Produktes (21) bzw. der Dienstleistung, die Produktionsstätte (7) oder die Verkaufsstelle (11), den Produktionszeitpunkt oder den Verkaufszeitpunkt und/oder den Preis des Produktes (21) oder der Dienstleistung betrifft.

5. Verfahren nach Anspruch 4,
dadurch **gekennzeichnet**,
daß die zusätzliche Information vor dem Erwerb des Produktes (21) bzw. der Dienstleistung ohne Mitwirkung des Kunden (14) in der Datensammelstation (1), insbesondere gemeinsam mit dem zugehörigen Code (22, 25) im Referenzspeicher (4) der Datensammelstation (1) gespeichert wird.

6. Verfahren nach Anspruch 4,
dadurch **gekennzeichnet**,
daß die zusätzliche Information im Code (22, 25) enthalten ist.

7. Verfahren nach einem der vorhergehenden Ansprüche,
dadurch **gekennzeichnet**,
daß ein mehrere Male von einem oder mehreren Kunden (14) an die Datensammelstation (1) übermittelter Code (22, 25) von der Datensammelstation (1) lediglich bei der ersten Übermittlung berücksichtigt wird.

8. Verfahren nach einem der vorhergehenden Ansprüche,
dadurch **gekennzeichnet**,
daß sich die innerhalb einer bestimmten Zeitspanne zu übermittelnden Codes (22, 25) zumindest mit einer bestimmten Wahrscheinlichkeit voneinander unterscheiden.

9. Verfahren einem der vorhergehenden Ansprüche,
dadurch **gekennzeichnet**,
daß sich alle innerhalb einer bestimmten Zeitspanne zu übermittelnden Codes (22, 25) voneinander unterscheiden.

10. Verfahren nach einem der vorhergehenden Ansprüche,
dadurch **gekennzeichnet**,
daß zumindest ein Bestandteil des Codes (22, 25) aus einer Zufallszahl besteht.

11. Verfahren nach einem der vorhergehenden Ansprüche,
dadurch **gekennzeichnet**,
daß zumindest ein Bestandteil des Codes (22, 25) aus einer Pseudo-Zufallszahl besteht, wobei sichergestellt wird, daß sich alle innerhalb eines bestimmten Zeitraums erzeugten Zufallszahlen voneinander unterscheiden.

12. Verfahren nach einem der vorhergehenden Ansprüche,
dadurch **gekennzeichnet**,
daß der Code (22, 25) aus einer Ziffernfolge und/oder einer Buchstaben-/Ziffernfolge und/oder einem Barcode und/oder aus magnetisch, optisch oder elektronisch gespeicherten Daten besteht.

13. Verfahren nach einem der vorhergehenden Ansprüche,
dadurch **gekennzeichnet**,
daß der Code (22, 25) maschinenlesbar ausgebildet ist.

14. Verfahren nach einem der vorhergehenden Ansprüche,
dadurch **gekennzeichnet**,
daß die den Code (25) aufweisenden Belege (23) als von einem Kassencomputer (11) ausgedruckte Rechnungen, als Telefonrechnungen, als Eintrittskarten oder dergleichen ausgebildet sind.

15. Verfahren nach einem der vorhergehenden Ansprüche,
dadurch **gekennzeichnet**,
daß zumindest ein Teil des Codes (22, 25) durch ein handelsübliches Strichcode-Preisetikett gebildet wird.

16. Verfahren nach einem der Ansprüche 1 bis 13,
dadurch **gekennzeichnet**,
daß der Code (22) an einem von außen nicht sichtbaren und/oder nicht zugänglichen Ort (20a) einer Produktverpackung (21) oder eines Produktaufklebers angeordnet, insbesondere aufgedruckt, eingestanzt oder aufgeklebt ist.

17. Verfahren nach einem der vorhergehenden Ansprüche,
dadurch **gekennzeichnet**,
daß in der Datensammelstation (1) kundenspezifische Daten, wie z.B. der Name, die Postanschrift, die Telefonnummer, das Alter, das Geschlecht und/oder der Beruf des Kunden gespeichert werden.

18. Verfahren nach einem der vorhergehenden Ansprüche,
dadurch **gekennzeichnet**,
daß in der Datensammelstation (1) die Netzwerk-, insbesondere die Internet-Adresse des Kunden (14) gespeichert wird.

19. Verfahren nach einem der vorhergehenden Ansprüche,
dadurch **gekennzeichnet**,
daß in der Datensammelstation (1) der Zeitpunkt der Codeübermittlung an die Datensammelstation (1) gespeichert wird.

20. Verfahren nach einem der vorhergehenden Ansprüche,
dadurch **gekennzeichnet**,
daß bei einer ersten Kontaktaufnahme eines Kunden (14) mit der Datensammelstation (1) kundenspezifische Daten, insbesondere Name, Postanschrift und/oder Netzwerk-Adresse gespeichert werden und dem Kunden (14) eine Kennziffer bzw. ein Kenncode zugeteilt wird.

21. Verfahren nach Anspruch 20,
dadurch **gekennzeichnet**,
daß die Datensammelstation (1) den Kunden (14) bei nach der ersten Kontaktaufnahme erfolgenden weiteren Kontaktaufnahmen anhand der Kennziffer bzw. des Kenncodes identifiziert.

22. Verfahren nach einem der vorhergehenden Ansprüche,
dadurch **gekennzeichnet**,
daß die Datenübermittlung vom Kunden (14) an die Datensammelstation (1) zumindest ab der zweiten Kontaktaufnahme durch vom Kunden (14) getätigte Telefon-Tastatureingaben ausgelöst wird, wobei die zu übermittelnden Daten, vorzugsweise der zu übermittelnde Code aus Ziffern, insbesondere ausschließlich aus Ziffern besteht.

23. Verwendung einer gemäß Anspruch 1 bis 22 aufgebauten Datenbank,
dadurch **gekennzeichnet**,
daß ein Kunde (14), nachdem er eine bestimmte Anzahl von Produkten (21) bzw. Dienstleistungen oder Produkte bzw. Dienstleistungen, die einem bestimmten Gegenwert entsprechen, erworben hat, eine vorzugsweise über das Kommunikationsnetzwerk, insbesondere über Internet übermittelbare Belohnung erhält.

24. Verwendung nach Anspruch 23,
dadurch **gekennzeichnet**,
daß die Belohnung durch eine Gutschrift eines bestimmten Geldbetrages (e-cash), durch Einräumung bestimmter Internet-Shopping-Rechte oder durch Einräumung von über Internet ausübbaren Nutzungsrechten erfolgt.

25. Verwendung einer gemäß Anspruch 1 bis 22 aufgebauten Datenbank,
dadurch **gekennzeichnet**,
daß in Abhängigkeit von bestimmten, bezüglich eines Kunden (14) in der Datensammelstation (1) gespeicherten Daten eine automatische Kontaktaufnahme mit dem Kunden (14) über das Kommunikationsnetzwerk, insbesondere über Internet erfolgt, wobei vorzugsweise Werbebotschaften übermittelt werden.

26. Verwendung nach Anspruch 25,
dadurch **gekennzeichnet**,
daß die Auswahl der jeweiligen Werbebotschaft in Abhängigkeit der gespeicherten Daten erfolgt, so daß individuelle, beispielsweise an das Kaufverhalten des Kunden (14) angepaßte Werbebotschaften übermittelbar sind.

27. Vorrichtung zur Herstellung von im Rahmen des Verfahrens nach einem der Ansprüche 1 bis 22 verwendbaren Produktverpackungen, Produktaufklebern und/oder Produktanhängern,
dadurch **gekennzeichnet**,
daß eine Einheit (9) zur Markierung der Produktverpakkungen (21), Produktaufkleber und/oder Produktanhänger mit einem Code (22) nach einem der vorhergehenden Ansprüche vorgesehen ist.

28. Vorrichtung nach Anspruch 27,
dadurch **gekennzeichnet,**
daß die Einheit (9) zur Markierung derart ausgestaltet ist, daß der Code (22) auf einer von außen nicht sichtbaren Stelle (20a) der fertigen Produktverpackung (21), insbesondere auf der Rückseite eines bereits bedruckten oder noch zu bedruckenden Verpackungszuschnitts anbringbar ist.

29. Kassencomputer zur Verwendung in Verbindung mit einem Verfahren nach einem der Ansprüche 1 bis 22,
dadurch **gekennzeichnet**,
daß eine Einheit (12) zur Generierung oder zum Empfang eines Codes (25) nach einem der vorhergehenden Ansprüche und ein Druckwerk (13) zum Ausdrucken dieses Codes (25) auf einen Beleg (23) vorgesehen sind.

30. Kassencomputer nach Anspruch 29,
dadurch **gekennzeichnet**,
daß ein Zufallsgenerator zur Generierung zumindest eines Bestandteils eines Codes (25) nach einem der vorhergehenden Ansprüche vorgesehen ist.

31. Kassencomputer nach Anspruch 30,
dadurch **gekennzeichnet**,
daß eine Vorrichtung zur Vermeidung der Generierung zweier untereinander gleicher Codes (25) innerhalb eines bestimmten Zeitraums vorgesehen ist.

32. Kassencomputer nach einem der Ansprüche 29 bis 31,
dadurch **gekennzeichnet**,
daß ein Anschluß (12) für ein Kommunikationsnetzwerk, insbesondere ein Internet-Anschluß vorgesehen ist, über den die erzeugten bzw. ausgedruckten Codes (25) und/oder die vom Kassencomputer (11) erzeugte Zusatzinformation gemäß Anspruch 4 an die Datensammelstation (1) übermittelbar sind.

33. Kassencomputer nach Anspruch 32,
dadurch **gekennzeichnet**,
daß über den Anschluß (12) für das Kommunikationsnetzwerk in der Datensammelstation (1) erzeugte und vom Kassencomputer (11) auszudruckende Codes (25) empfangbar sind.

34. Kassencomputer nach einem der Ansprüche 29 bis 33,
dadurch **gekennzeichnet**,
daß die Datenübermittlung über das Kommunikationsnetzwerk paketweise, insbesondere zu vorgegebenen Zeiten oder in vorgegebenen Zeitintervallen erfolgt.

## Claims

1. A method of building up a data bank (3) containing customer data, wherein products (21) to be sold to customers (14) or receipts (23) handed out to customers (14) upon purchase of products (21) or services are each provided with a code (22, 25) and the code (22, 25) together with the data which characterises the respective customer (14) is transmitted via a communication network, in particular via the Internet or a telephone network, to a data-collection station (1) by the customer (14) after the product (21) or the service has been purchased, characterised in that before purchase of the product (21) or service, the code (22, 25) is stored without the involvement of the customer (14) in a reference memory (4) associated with the data-collection station (1), in that after the code (22, 25) has been transmitted by the customer (14) to the data-collection station (1), this code (22, 25) transmitted by the customer (14) is compared with the code (22, 25) stored beforehand in the reference memory (4), and in that to organise a discount or coupon or reward system, the data-collection station (1) only takes into consideration those transmitted codes (22, 25) already stored beforehand in the reference memory (4).

2. A method according to Claim 1, characterised in that an individual code is used as a code (22, 25).

3. A method according to one of Claims 1 and 2, characterised in that the data-collection station (1) is designed at least to store the data characterising the respective customer (14).

4. A method according to any one of the preceding Claims, characterised in that additional information relating to the product (21) or the service is stored in the data-collection station (1), preferably in the reference memory (4), this information being associated in each case with the related code (22, 25) and relating for example to the type of product (21) or service, the production centres (7) or the sales location (11), the production date or the date of sale and/or the price of the product (21) or the service.

5. A method according to Claim 4, characterised in that the additional information is stored in the data-collection station (1), in particular together with the related code (22, 25) in the reference memory (4) of the data-collection station (1), before purchase of the product (21) or service and without involvement of the customer (14).

6. A method according to Claim 4, characterised in that the additional information is contained in the code (22, 25).

7. A method according to any one of the preceding Claims, characterised in that a code (22, 25) transmitted several times to the data-collection station (1) by one or a plurality of customers (14) is only taken into account by the data-collection station (1) when transmitted for the first time.

8. A method according to any one of the preceding Claims, characterised in that the codes (22, 25) to be transmitted within a certain period of time differ from one another at least with a certain probability.

9. A method [according to] any one of the preceding Claims, characterised in that all codes (22, 25) to be transmitted within a certain period of time differ from one another.

10. A method according to any one of the preceding Claims, characterised in that at least one element of the code (22, 25) consists of a random number.

11. A method according to any one of the preceding Claims, characterised in that at least one element of the code (22, 25) consists of a pseudo random number, it being ensured that all random numbers produced within a certain period differ from one another.

12. A method according to any one of the preceding Claims, characterised in that the code (22, 25) consists of a numeral sequence and/or a letter and numeral sequence and/or a bar code and/or magnetically, optically or electronically stored data.

13. A method according to any one of the preceding Claims, characterised in that the code (22, 25) is machine-readable.

14. A method according to any one of the preceding Claims, characterised in that the receipts (23) having the code (25) are in the form of bills printed out by a cash-desk computer (11), telephone bills, entrance tickets or the like.

15. A method according to any one of the preceding Claims, characterised in that at least part of the code (22, 25) is formed by a bar-code price label customary in the trade.

16. A method according to any one of Claims 1 to 13, characterised in that the code (22) is arranged, in particular printed, stamped-in or stuck, at a site (20a), on product packaging (21) or a product sticker, invisible and/or inaccessible from the outside.

17. A method according to any one of the preceding Claims, characterised in that customer-specific data, such as e.g. the name, postal address, telephone number, age, sex and/or occupation of the customer, are stored in the data-collection station (1).

18. A method according to any one of the preceding Claims, characterised in that the network address, in particular the Internet address, of the customer (14) is stored in the data-collection station (1).

19. A method according to any one of the preceding Claims, characterised in that the point of time of the code transmission to the data-collection station (1) is stored in the data-collection station (1).

20. A method according to any one of the preceding Claims, characterised in that when a customer (14) first makes contact with the data-collection station (1), customer-specific data, in particular name, postal address and/or network address, are stored and an identification number or an identification code is assigned to the customer (14).

21. A method according to Claim 20, characterised in that after the first contact has been made, the data-collection station (1) identifies the customer (14) with the aid of the identification number or the identification code in instances of further contact.

22. A method according to any one of the preceding Claims, characterised in that at least from the second instance of contact, the data transmission to the data-collection station (1) by the customer (14) is brought about by entries made by the customer (14) on a telephone keypad, the data to be transmitted, preferably the code to be transmitted, consisting of numerals, in particular exclusively of numerals.

23. Use of a data bank built up in accordance with Claims 1 to 22, characterised in that when a customer (14) has purchased a certain number of products (21) or services or products or services which correspond to a certain equivalent value, he receives a reward preferably transmittable via the communication network, in particular via the Internet.

24. Use according to Claim 23, characterised in that rewarding takes place through crediting a certain sum of money (e-cash), through according certain Internet shopping rights or through according utilisation rights exercisable via the Internet.

25. Use of a data bank built up in accordance with Claims 1 to 22, characterised in that contact is made with the customer (14) automatically via the communication network, in particular via the Internet, dependent on certain customer data stored in the data-collection station (1), advertising communications preferably being transmitted.

26. Use according to Claim 25, characterised in that the selection of the specific advertising communication takes place dependent on the data stored, so that individual advertising communications can be transmitted which are for example matched to the purchasing behaviour of the customer (14).

27. A device for producing product packaging, product stickers and/or product tags usable within the framework of the method according to any one of Claims 1 to 22, characterised in that a unit (9) for marking the product packaging. (21), product stickers and/or product tags with a code (22) according to any one of the preceding Claims is provided.

28. A device according to Claim 27, characterised in that the unit (9) for marking is such that the code (22) can be placed at a site (20a), on the finished product packaging (21), invisible from the outside, in particular on the reverse of a packaging blank which has already been printed or which is still to be printed.

29. A cash-desk computer for use in conjunction with a method according to any one of Claims 1 to 22, characterised in that a unit (12) for generating or receiving a code (25) according to any one of the preceding Claims and a printing unit (13) for printing out this code (25) onto a receipt (23) are provided.

30. A cash-desk computer according to Claim 29, characterised in that a random generator for generating at least one element of a code (25) according to any one of the preceding Claims is provided.

31. A cash-desk computer according to Claim 30, characterised in that a device to prevent the generation of two identical codes (25) within a certain period of time is provided.

32. A cash-desk computer according to any one of Claims 29 to 31, characterised in that a connection (12) for a communication network, in particular an Internet connection, is provided, via which the produced or printed-out codes (25) and/or the additional information in accordance with Claim 4 produced by the cash-desk computer (11) can be transmitted to the data-collection station (1).

33. A cash-desk computer according to Claim 32, characterised in that codes (25) produced in the data-collection station (1) and to be printed out by the cash-desk computer (11) can be received via the connection (12) for the communication network.

34. A cash-desk computer according to any one of Claims 29 to 33, characterised in that the data transmission via the communication network takes place packet-wise, in particular at given times or at given time intervals.

## Revendications

1. Procédé pour créer une banque de données (3) contenant des données-clients, dans le cas duquel les produits (21) à vendre à des clients (14) ou les justificatifs (23) remis aux clients (14) lors de l'achat de produits (21) ou de prestations de services sont respectivement munis d'un code (22, 25), et le code (22, 25) étant transmis par le client (14) à une station de recueil des données (1) avec les données caractérisant le client (14) respectif après l'acquisition du produit (21) ou du service par l'intermédiaire d'un réseau de communication, notamment par Internet ou un réseau téléphonique, **caractérisé en ce que** le code (22, 25) est mis en mémoire dans une mémoire de référence (4) attribuée à la station de recueil des données (1) avant l'acquisition du produit (21) ou du service sans intervention du client (14), en ce que, après la transmission du code (22, 25) effectuée par le client (14) à la station de recueil des données (1), une comparaison est réalisée entre le code (22, 25) transmis par le client et le code (22, 25) déposé auparavant dans la mémoire de référence (4), et que pour l'organisation d'un système de rabais ou de coupon ou de récompense, seuls les codes (22, 25) transmis et déposés auparavant dans la mémoire de référence (4) sont pris en compte par la station de recueil des données (1).

2. Procédé selon la revendication 1, **caractérisé en ce qu**'un code individuel est utilisé comme code (22, 25).

3. Procédé selon l'une des revendications 1 ou 2, **caractérisé en ce que** la station de recueil des données (1) est conçue pour au moins la mise en mémoire des données caractérisant le client (14) respectif.

4. Procédé selon l'une des revendications précédentes, **caractérisé en ce que** l'information supplémentaire concernant le produit (21) ou le service est mise en mémoire dans la station de recueil des données (1), de préférence dans la mémoire de référence (4), cette information étant attribuée au code correspondant (22, 25) et concernant par exemple le type de produit (21) ou de service, les sites de production (7) ou le lieu de vente (11), le moment de production ou de vente et/ou le prix du produit (21) ou du service.

5. Procédé selon la revendication 4, **caractérisé en ce que** l'information supplémentaire est mise en mémoire dans la station de recueil des données (1) avant l'acquisition du produit (21) ou du service sans intervention du client (14), notamment dans la mémoire de référence (4) de la station de recueil des données (1) avec le code (22, 25) correspondant.

6. Procédé selon la revendication 4, **caractérisé en ce que** l'information supplémentaire est contenue dans le code (22, 25).

7. Procédé selon l'une des revendications précédentes, **caractérisé en ce qu**'un code (22, 25) transmis plusieurs fois à la station de recueil des données (1) par un ou plusieurs clients (14) est pris en compte par la station de recueil des données (1) seulement à la première transmission.

8. Procédé selon l'une des revendications précédentes, **caractérisé en ce que** les codes (22, 25) à transmettre dans une période définie se différencient les uns des autres au moins par une certaine probabilité.

9. Procédé selon l'une des revendications précédentes, **caractérisé en ce que** tous les codes (22, 25) à transmettre dans une période définie se différencient les uns des autres.

10. Procédé selon l'une des revendications précédentes, **caractérisé en ce qu**'au moins une partie du code (22, 25) est composé d'un chiffre aléatoire.

11. Procédé selon l'une des revendications précédentes, **caractérisé en ce qu**'au moins une partie du code (22, 25) est composé d'un pseudo chiffre aléatoire, ce qui garantit que tous les chiffres aléatoires créés dans une période définie se différencient les uns des autres.

12. Procédé selon l'une des revendications précédentes, **caractérisé en ce que** le code (22, 25) est composé d'une suite de chiffres et/ou d'une suite de lettres/chiffres et/ou d'un code à barres et/ou de données enregistrées de manière magnétique, optique ou électronique.

13. Procédé selon l'une des revendications précédentes, **caractérisé en ce que** le code (22, 25) est formé de façon à pouvoir être lu par une machine.

14. Procédé selon l'une des revendications précédentes, **caractérisé en ce que** les justificatifs (23) présentant le code (25) sont formés comme des factures imprimées par un ordinateur de caisse (11), comme des factures de téléphone, comme des billets d'entrée ou des documents similaires.

15. Procédé selon l'une des revendications précédentes, **caractérisé en ce qu'au** moins une partie du code (22, 25) est formée par une étiquette de prix usuelle dans le commerce avec code à barres.

16. Procédé selon l'une des revendications 1 à 13, **caractérisé en ce que** le code (22) est placé, notamment imprimé, poinçonné ou collé, à un endroit (20a) non visible de l'extérieur et/ou inaccessible de l'emballage du produit (21) ou d'une étiquette du produit.

17. Procédé selon l'une des revendications précédentes, **caractérisé en ce que** les données spécifiques au client, comme par exemple le nom, l'adresse postale, le numéro de téléphone, l'âge, le sexe et/ou la profession, sont mises en mémoire dans la station de recueil des données (1).

18. Procédé selon l'une des revendications précédentes, **caractérisé en ce que** l'adresse réseau, notamment l'adresse Internet du client (14), est mise en mémoire dans la station de recueil des données (1).

19. Procédé selon l'une des revendications précédentes, **caractérisé en ce que** le moment de transmission du code à la station de recueil des données (1) est mis en mémoire dans la station de recueil des données (1).

20. Procédé selon l'une des revendications précédentes, **caractérisé en ce que,** lors de la première prise de contact d'un client (14) avec la station de recueil des données (1), des données spécifiques au client, notamment le nom, l'adresse postale et/ou l'adresse réseau, sont mises en mémoire et qu'un chiffre d'identification ou un code d'identification est attribué au client (14).

21. Procédé selon la revendication 20, **caractérisé en ce que** la station de recueil des données (1) identifie le client (14), lors des prises de contact suivant la première prise de contact, à l'aide du chiffre d'identification ou du code d'identification.

22. Procédé selon l'une des revendications précédentes, **caractérisé en ce que** la transmission de données du client (14) à la station de recueil des données (1) est déclenchée au moins à partir de la deuxième prise de contact par l'entrée de données effectuée par le client (14) à l'aide des touches du téléphone, les données à transmettre, de préférence le code à transmettre, étant composées de chiffres, notamment exclusivement de chiffres.

23. Utilisation d'une banque de données créée selon les revendications 1 à 22, **caractérisée en ce qu**'un client (14), après avoir acheté un certain nombre de produits (21) ou de services ou des produits et des services qui correspondent à une contre-valeur définie, obtient une récompense transmissible de préférence à l'aide du réseau de communication, notamment par Internet.

24. Utilisation selon la revendication 23, **caractérisée en ce que** la récompense s'effectue au moyen d'un bon d'un certain montant (e-cash), d'une allocation de certains droits d'achats sur Internet ou d'une allocation de droits utilisables par Internet.

25. Utilisation d'une banque de données créée selon l'une des revendications 1 à 22, **caractérisée en ce qu**'une prise de contact automatique avec le client (14) est réalisée à l'aide du réseau de communication, notamment par Internet, en fonction de certaines données relatives à un client (14) mises en mémoire dans la station de recueil des données (1), des messages publicitaires étant de préférence transmis.

26. Utilisation selon la revendication 25, **caractérisée en ce que** la sélection du message publicitaire respectif s'effectue en fonction des données mises en mémoire, de sorte que des messages publicitaires individuels, adaptés par exemple au comportement du client (14), sont transmissibles.

27. Dispositif pour la fabrication d'emballages de produits, d'étiquettes collées sur des produits et/ou d'étiquettes mobiles sur des produits utilisables dans le cadre du procédé selon l'une des revendications 1 à 22, **caractérisé en ce qu**'une unité (9) est prévue pour marquer les emballages de produits (21), les étiquettes collées sur les produits et/ou les étiquettes mobiles sur les produits avec un code (22) selon l'une des revendications précédentes.

28. Dispositif selon la revendication 27, **caractérisé en ce que** l'unité (9) prévue pour le marquage est réalisée de telle sorte que le code (22) est applicable à un endroit (20a) non visible de l'extérieur sur l'emballage de produit fini (21), notamment au dos d'une partie de l'emballage déjà imprimée ou à imprimer.

29. Ordinateur de caisse pour l'utilisation relative à un procédé selon l'une des revendications 1 à 22, **caractérisé en ce qu**'une unité (12) est prévue pour la génération ou la réception d'un code (25) selon l'une des revendications précédentes et qu'un mécanisme d'impression (13) est prévu pour l'impression de ce code (25) sur un justificatif (23).

30. Ordinateur de caisse selon la revendication 29, **caractérisé en ce qu**'un générateur aléatoire est prévu pour la génération d'au moins une partie d'un code (25) selon l'une des revendications précédentes.

31. Ordinateur de caisse selon la revendication 30, **caractérisé en ce qu**'un dispositif est prévu pour éviter la génération de deux codes (25) identiques dans une période définie.

32. Ordinateur de caisse selon l'une des revendications 29 à 31, **caractérisé en ce qu**'un raccordement (12) à un réseau de communication est prévu, notamment une connexion Internet, à l'aide duquel le code (25) créé ou imprimé et/ou l'information supplémentaire créée par l'ordinateur de caisse (11) selon la revendication 4 sont transmissibles à la station de recueil des données (1).

33. Ordinateur de caisse selon la revendication 32, **caractérisé en ce que** les codes (25) créés dans la station de recueil des données (1) et à imprimer par l'ordinateur de caisse (11) peuvent être reçus par le raccordement (12) au réseau de communication.

34. Ordinateur de caisse selon l'une des revendications 29 à 33, **caractérisé en ce que** la transmission des données à l'aide du réseau de communication s'effectue par paquets, notamment à des moments prédéfinis ou des intervalles de temps prédéfinis.
